(19) Europäisches Patentamt / European Patent Office / Office européen des brevets

(11) **EP 4 111 376 B1**

(12) **EUROPEAN PATENT SPECIFICATION**

(45) Date of publication and mention
of the grant of the patent:
**28.01.2026 Bulletin 2026/05**

(21) Application number: **21731442.6**

(22) Date of filing: **04.06.2021**

(51) International Patent Classification (IPC):
$G06N\ 3/0895^{(2023.01)}$    $G06N\ 3/045^{(2023.01)}$
$G06N\ 3/084^{(2023.01)}$    $G06N\ 3/0464^{(2023.01)}$

(52) Cooperative Patent Classification (CPC):
**G06N 3/084; G06N 3/045; G06N 3/0455;
G06N 3/0464; G06N 3/0895**

(86) International application number:
**PCT/EP2021/065071**

(87) International publication number:
**WO 2021/245277 (09.12.2021 Gazette 2021/49)**

(54) **SELF-SUPERVISED REPRESENTATION LEARNING USING BOOTSTRAPPED LATENT REPRESENTATIONS**

SELBSTÜBERWACHTES DARSTELLUNGSLERNEN UNTER VERWENDUNG VON BOOTSTRAPPING-LATENTDARSTELLUNGEN

APPRENTISSAGE DE REPRÉSENTATION AUTO-SUPERVISÉ À L'AIDE DE REPRÉSENTATIONS LATENTES D'AMORÇAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.06.2020 US 202063035583 P
15.06.2020 US 202063039343 P**

(43) Date of publication of application:
**04.01.2023 Bulletin 2023/01**

(60) Divisional application:
**25226277.9**

(73) Proprietor: **GDM Holding LLC
Mountain View, CA 94043 (US)**

(72) Inventors:
• **GRILL, Jean-Bastien François Laurent
75009 Paris (FR)**
• **STRUB, Florian
75009 Paris (FR)**
• **ALTCHÉ, Florent
75009 Paris (FR)**
• **TALLEC, Corentin
London N1C 4AG (GB)**
• **RICHEMOND, Pierre
London N1C 4AG (GB)**
• **PIRES, Bernardo Avila
London N1C 4AG (GB)**
• **GUO, Zhaohan
London N1C 4AG (GB)**
• **AZAR, Mohammad Gheshlaghi
London N1C 4AG (GB)**
• **PIOT, Bilal
London N1C 4AG (GB)**
• **MUNOS, Remi
London N1C 4AG (GB)**
• **VALKO, Michal
75009 Paris (FR)**

(74) Representative: **Marks & Clerk GST
1 New York Street
Manchester M1 4HD (GB)**

(56) References cited:

- **TARVAINEN ANTTI ET AL: "Mean teachers are better role models: Weight-averaged consistency targets improve semi-supervised deep learning results", 16 April 2018 (2018-04-16), arXiv.org, pages 1 - 16, XP055846104, Retrieved from the Internet <URL:https://arxiv.org/pdf/1703.01780.pdf> [retrieved on 20210930]**

- **ZHOU YAN ET AL: "Breaking Transferability of Adversarial Samples with Randomness", 17 June 2018 (2018-06-17), arXiv.org, pages 1 - 19, XP055846098, Retrieved from the Internet <URL:https://arxiv.org/pdf/1805.04613.pdf> [retrieved on 20210930]**

# Description

## BACKGROUND

This specification relates to image processing using machine learning models.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Tarvainen et al. "Mean teachers are better role models: Weight-averaged consistency targets improve semi-supervised deep learning results", 16 April 2018, arxiv: 1703.01780, describes a technique for using unlabeled data to reduce over-fitting in semi-supervised learning of a classification task using some labelled examples.

## SUMMARY

This specification describes a system implemented as computer programs on one or more computers in one or more locations that is configured to learn a representation of data item such as an image through a self-supervised learning process.

A first aspect of the disclosure provides a computer-implemented method according to claim 1.

The term "transformed view" refers to a transformed version of the training data item, and is used to distinguish the training data item after it has undergone a transformation, e.g. an image transformation, from the original (untransformed) training data item.

The parameters of a neural network may comprise weights of the neural network, and updating the parameters of a neural network may comprise adjusting the values of the weights.

Updating one or more parameters of the target neural network comprises updating one or more parameters of the target neural network with a moving average of the parameters of the online neural network. The moving average may be an exponential moving average.

Updating one or more parameters of the target neural network may comprises determining updated values of the one or more parameters of the target neural network in accordance with $\xi \leftarrow \tau\xi + (1 - \tau)\theta$, where $\xi$ represents the parameters of the target neural network, $\theta$ represents the parameters of the online neural network, and $\tau$ is a decay rate. The decay rate may be a value between zero and one.

The online neural network and the target neural network each comprise a respective encoder neural network. Thus the method further comprises performing, by each encoder neural network, operations including receiving a transformed view of the training data item, and processing the transformed view of the training data item, to generate a representation of the training data item.

Optionally, each encoder neural network may comprise a residual neural network, network i.e. a neural network with one or more residual or skip connections around one or more layers of the neural network.

When the online neural network has been trained, the encoder neural network of the online neural network may be used to generate a representation of (pixels of) an input image. An image representation thus generated may be used by other downstream tasks.

For example, an image classification operation may be performed on the image representation. As another example, an image segmentation operation may be performed on the image representation. Other image processing tasks may alternatively or additionally be performed.

The online neural network and the target neural network may each comprise a respective projection neural network. The method may further comprise performing, by each projection neural network, operations including receiving a representation of the training data item, and processing the representation of the training data item, to reduce the dimensionality of the representation. Optionally, each projection neural network may comprise a multi-layer perceptron.

The use of projection neural networks is optional, as the online neural network may directly predict the representation of the training data item, that is generated by the target neural network (rather than predicting a projection of the representation). However, the use of a projection neural network can provide improved performance.

The online neural network comprises a prediction neural network. The method may further comprise performing, by the prediction neural network, operations including receiving a representation of the training data item, e.g. image, and processing the representation of the training data item, using a regression model embodied by parameters of the prediction neural network, to generate the prediction of the target output. Optionally, the prediction neural network may comprise a multi-layer perceptron. Use of a prediction neural network is not essential but can help improve stability of the training. The target neural network does not comprise a prediction neural network.

The online neural network and the target neural network have the same neural network architecture but different parameter values, except for one or more additional processing stages in one of the neural networks, in particular in the online neural network.

The target neural network may have a stop gradient ("sg"). The stop gradient prevents backpropagation into the target neural network, such that the parameters of the target neural network are not updated when the error is minimized.

The method may further comprise initializing the parameters of the online neural network and/or the target neural network to random values.

The method may further comprise applying a first data item transformation, e.g. image transformation to the training data item, e.g. image, to generate the first transformed view of the training data item, and applying a second data item transformation, e.g. image transformation, to the training data item to generate the second transformed view of the training data item. The second data item transformation, e.g. image transformation, is different from the first data item transformation, e.g. image transformation.

Where the training data item comprises a training image the first image transformation and the second image transformation may include any combination of any one or more of: random cropping; flipping along a horizontal and/or vertical axis; color jittering; conversion to grayscale; Gaussian blurring; or solarization. Other image transformations may alternatively or additionally be used. By using transformed views of the training image the online neural network learns based on the target network's representation of another transformed view of the same training image.

Although the present disclosure focuses on examples in which two different transformed views of the training data item, e.g. image, are input to the online neural network and the target neural network, in other examples a transformed view of the training data item, may be input to only one of the online neural network and target neural network. In these examples, the original (untransformed) training data item, is input to the other of the online neural network and the target neural network.

Updating one or more parameters of the online neural network may involve using a machine learning optimizer, e.g. based on stochastic gradient descent, to minimize the above described error. Updating one or more parameters of the online neural network may comprise normalizing the prediction of the target output; and minimizing a squared error between the normalized prediction of the target output and the target output.

The operations of processing the first transformed view of the training data item with the target neural network, processing the second transformed view of the training data item with the online neural network, updating the one or more parameters of the online neural network, and updating the one or more parameters of the target neural network may be performed iteratively for each training data item in a batch comprising a plurality of training data items. The parameters of the online neural network and the target neural network may be updated after each training data item in the batch has been processed.

A further aspect not covered by the subject-matter of the claims of the disclosure provides a computer-implemented method of processing a data item, e.g. of processing an image. The method comprises providing an input data item, e.g. image, to an online neural network, i.e. to part of the trained online neural network, the online neural network having been trained in accordance with the present disclosure; processing the input data item, e.g. image, by the online neural network i.e. using the part of the trained online neural network; outputting a representation of the input data item, e.g. image, from the online neural network i.e. from the part of the trained online neural network; and processing the representation of the input data item, e.g. image.

The online neural network may comprise a residual neural network configured to generate the representation of the input data item, e.g. image.

Where the input data item comprises an image, processing the representation of the input image may include classifying the input image, using the representation of the input image. Also or instead, processing the representation of the input image may include segmenting the input image, using the representation of the input image. Also or instead other image processing tasks may be performed.

A further aspect of the disclosure provides a system comprising one or more computers and one or more storage devices storing instructions that when executed by the one or more computers cause the one or more computers to perform any of the methods disclosed herein.

A further aspect of the disclosure provides one or more computer storage media storing instructions that, when executed by one or more computers, cause the one or more computers to perform any of the methods disclosed herein.

The subject matter described in this specification can be implemented in particular embodiments so as to realize one or more of the following advantages.

The online neural network is trained by a self-supervised learning process, whereby the online neural network learns to represent images from raw, unlabeled training data. Unlike approaches to self-supervised learning which use a contrastive loss function, the techniques disclosed herein avoid the need for negative pairs of training examples e.g. images (that is, pairs of different training examples e.g. images). This, in turn, can avoid the difficulties associated with the use of negative pairs, such as the need for large batch sizes, memory banks consisting of representations of samples in the training dataset, and the need for careful selection of negative pairs. Nevertheless when applied for example to image classification tasks, the image representations generated by the online neural network trained as disclosed herein have been found to achieve classification accuracies that are on a par with training using labelled examples and superior to some contrastive methods.

The techniques disclosed herein also avoid the high computational requirements of some methods, and as such the techniques disclosed herein are computationally efficient.

The inputs to the online neural network and the target neural may comprise e.g. any suitable type of image data, e.g. including video image data. The image data may comprise color or monochrome pixel value data. Such image data may be captured from an image sensor such as a camera or LIDAR sensor.

The image representations generated by the online neural network disclosed herein can be used for a wide variety of image processing tasks. For example, the image representations may be used for image classification, whereby a classification system outputs one or more class labels for a given input image representation. Continuing this example, the classification system may process the image representation and output scores for each of a set of object categories, with each score representing an estimated likelihood that the image contains an object belonging to the category.

As another example of an image processing task, the image representations may be used for image segmentation, whereby a segmentation system uses the image representation to label individual pixels of an input image as belonging to one of a plurality of different classes. One example use case of image segmentation is in object detection, whereby the segmentation system labels pixels of an input image in accordance with the type of object represented by each pixel.

Object detection may be used as an input to a mechanical agent, such as a robot or vehicle, which may be operating in a real-world environment. The detected objects may be, for example, obstacles (e.g., people, other mechanical agents, walls) and/or paths (e.g., roads or other surfaces upon which the mechanical agent can move). The objects thus detected can be used by a control system of the mechanical agent to make decisions on how to accomplish a mechanical task, such as controlling the direction and/or speed of movement of the mechanical agent.

Another example use case of image segmentation is to segment medical images, whereby the segmentation system labels pixels of an input medical image in accordance with whether they show a region of a human or animal body in which a particular medical condition is present. These are purely non-limiting examples of image segmentation, and there are many other practical applications of image segmentation.

Throughout this specification, processing an image using a neural network refers to processing intensity values associated with the pixels of the image using the neural network.

The details of one or more implementations of the subject matter described in this specification are set forth in the accompanying drawings and the description below.

BRIEF DESCRIPTION OF DRAWINGS

Figure 1 shows an example neural network system including an encoder neural network.
Figure 2 shows an example process for training the system of Figure 1.
Figure 3 shows an example process for using a trained encoder neural network.
Figures 4a and 4b show an example neural network system including a trained encoder neural network, and an example process for training and using the system.
Figure 5 illustrates performance of the trained encoder neural network on an image classification task.

In the Figures like reference numerals indicate like elements.

DETAILED DESCRIPTION

This specification describes a method of training an encoder neural network to generate representations of data items, without using labelled training data items, and without using a contrastive loss. Methods which use a contrastive loss learn to discriminate between positive examples i.e. two transformed or "augmented" views of the same data item and negative examples which comprise augmented transformed or "augmented" views of different data items. Implementations of the described method need only positive examples for their objective function, and not negative examples, which can be awkward to generate. They can also achieve performance which approaches that of neural networks with labelled training data.

The data items comprise images, but in general any type of data item may be processed. Some examples of different types of data item are described later. The method may be used to train an encoder neural network for performing any type of task involving processing the same type of data item as used in the training, e.g. an image.

In the case of an image data item, which as used here includes a video data item, the tasks may include any sort of image processing or vision task such as an image classification or scene recognition task, an image segmentation task e.g. a semantic segmentation task, an object localization or detection task, a depth estimation task. When performing such a task the input may comprise or be derived from pixels of the image. For an image classification or scene recognition task the output may comprise a classification output providing a score for each of a plurality of image or scene categories e.g. representing an estimated likelihood that the input data item or an object or element of the input data item, or an action within a video data item, belongs to a category. For an image segmentation task the output may comprise, for each pixel, an assigned segmentation category or a probability that the pixel belongs to a segmentation category, e.g. to an object or action represented in the image or video. For an object localization or detection task the output may comprise data defining coordinates of a bounding box or region for one or more objects represented in the image. For a depth estimation task the output may comprise, for each pixel, an estimated depth value such that the output pixels define a (3D) depth map for the image. Such tasks may also contribute to higher level tasks e.g. object tracking across video frames; or gesture recognition i.e. recognition of gestures that are performed by entities depicted in a video.

Another example image processing task may include an image keypoint detection task in which the output comprises the coordinates of one or more image keypoints such as landmarks of an object represented in the image, e.g. a human pose estimation task in which the keypoints define the positions of body joints. A further example is an image similarity determination task, in which the output may comprise a value representing a similarity between two images, e.g. as part of an image search task.

The method is used to train a neural network system, of which the encoder neural network forms a part. The remainder of the system is not needed after training. The trained encoder neural network may be used for performing the task without further training, e.g. its parameters may be frozen, or it may be trained further to perform the specific task. In general the trained encoder neural network may be incorporated into a larger system to perform the specific task e.g. a system configured to perform an image classification, image segmentation, object localization, or depth estimation task. Thus there is also provided an image processing system incorporating the trained neural network.

In the case of image data items the transformed or "augmented" views may be transformed views of the same image. For example the image may be randomly cropped or distorted in different ways to generate the two views. In broad terms the method learns to generate representations which are robust to such transformations.

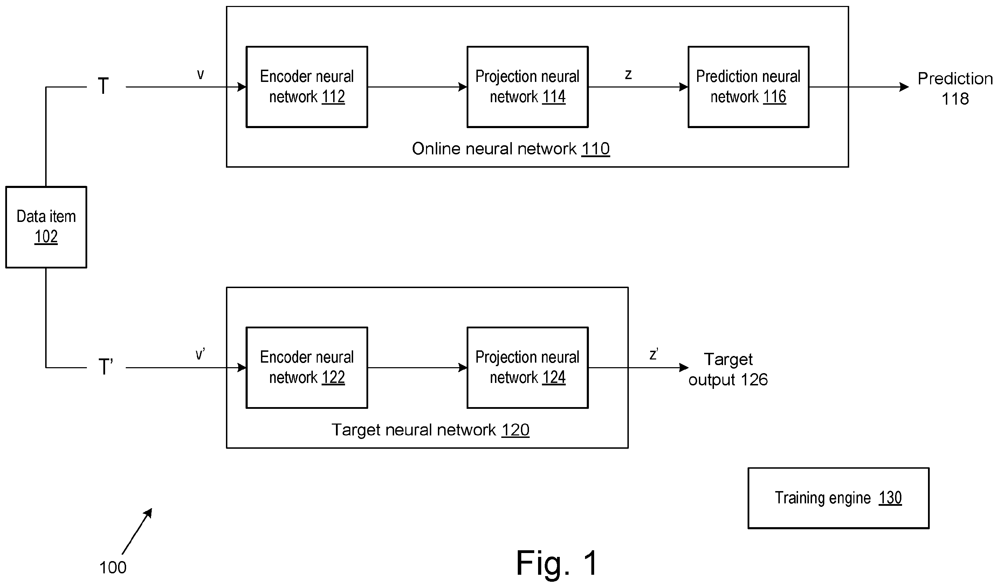

Figure 1 shows a neural network system 100 for implementing an example of the method. The system of Figure 1 may be implemented as one or more computer programs on one or more computers in one or more locations.

The system 100 comprises an online neural network 110 and a target neural network 120.

The target neural network 120 is configured to receive a first transformed view ($v'$) of a data item 102. The online neural network 110 is configured to receive a second transformed view ($v$) of the same data item 102. The transformed views are generated by applying a respective transform $(T', T)$ to the data item 102, as described further later. The data item 102 comprises an image, which as used herein includes an image frame of a video.

The target neural network 120 is configured to process the first transformed view ($v'$) of the data item to generate a target output 126 ($z'$). The online neural network 110 is configured to process the second transformed view ($v$) of the data item to generate a prediction 118 ($q(z)$) of the target output. The online neural network 110 is trained, e.g. by a training engine 130, by updating parameters of the online neural network using a machine learning optimizer, to minimize a difference, or error, between the prediction 118 of the target output 126 and the target output 126.

The online neural network 110 and comprises an encoder neural network 112, an optional projection neural network 114, and a prediction neural network 116 and is defined by a set of parameters of these neural networks. The target neural network 120 comprises an encoder neural network 122, and an optional projection neural network 124, and is defined by a set of parameters of these neural networks.

The target neural network 120 has the same architecture as the online neural network 110 (except for the prediction neural network) but different parameters (weights). That is, the encoder neural networks 112, 122 may be the same neural network but with different parameters; and similarly projection neural networks 114, 124 may be the same neural network but with different parameters.

The encoder neural networks 112, 122 each receive a transformed view of data item 102 and process this to generate a representation of their respective transformed view of data item 102, i.e. a high dimensional feature vector. This may be received and processed by the subsequent respective projection neural network 114, 124 to generate a reduced dimensionality representation of their respective transformed view of data item 102, i.e. a reduced dimensionality feature vector, respectively $z$, $z'$. The reduced dimensionality representation from the projection neural network 124 provides the target output 126.

The prediction neural network 116 receives the reduced dimensionality representation from projection neural network 114 (or the representation from encoder neural network 112) and processes this to generate the prediction 118. In implementations prediction 118 comprises a vector which has the same dimensionality as the target output 126. An input to the prediction neural network 116 may comprise a feature vector representation of the data item which is the same as that of the target output 126, except for the values of the feature vector. The target output 126 may be an output of the projection neural network 124 as previously described or, in some implementations, the representation from encoder neural network 122.

The encoder neural networks 112, 122 may have any architecture suitable for encoding data item 102. A result of the training method described herein is a trained encoder neural network 112. The encoder neural network 112 is trained to generate representations of the input data items, and may be any neural network which is configured to receive one the data items as an input and to generate a feature vector representation of the received data item.

For example, where a data item comprises an image or video, the encoder neural networks 112, 122 may each comprise any type of image or video encoding neural network which is configured to generate a representation, e.g. a feature vector representation, of an input image or video. Such an image or video encoding neural network may comprise one or more convolutional neural network layers, or may have any other architecture suitable for image or vision processing. In implementations such image or video encoder neural networks 112, 122 may each comprise a residual neural network i.e. a neural network with one or more residual or skip connections. Merely as an illustrative example a convolutional neural network with one or more residual or skip connections may be used, e.g. based on ResNet (He et al., arXiv:1512.03385); but it is not necessary to use a convolutional neural network.

In general the encoder neural networks 112, 122 are configured to process data items of the type for which the encoder neural network 112 is to be trained.

The projection neural networks 114, 124 may be any neural networks which are configured to reduce the dimensionality of a feature representation. For example each may comprise a multi-layer perceptron with a smaller output space than input space e.g. comprising one or more fully-connected layers, each optionally followed by a batch normalization layer (Ioffe and Szegedy, arXiv:1502.03167), followed by a fully-connected, optionally linear, output layer.

Merely by way of example, with 224 x 224 pixel images, the feature vector representation generated by each of the encoder neural networks may have a dimension of 4096, and the reduced dimensionality representation may have a dimension of 256.

In implementations the system may train the encoder neural network 112 to disregard the transformations applied to the data items. Taking the example of an image data item, if the transformations to the training images include color changes the feature representation could learn to disregard color. Projecting the feature representation to a reduced dimensionality representation may help maintain useful information in the feature representation.

In implementations the prediction neural network 116 may be a relatively small neural network that learns to predict the target output, e.g. to predict the reduced dimensionality representation from projection neural network 124 from the reduced dimensionality representation from projection neural network 114. Thus parameters of the prediction neural network 116 embody a regression model. In an example implementation the prediction neural network 116 comprises another multi-layer perceptron.

Optionally the output vectors of each of the target output 126 and prediction 118 may be normalized e.g. using an L2 norm. For example the target output 126, $z'$, may be normalized as $\bar{z}' = z'/\|z'\|_2$, and the prediction 118, $q(z)$, may be normalized as $\bar{q}(z) = q(z)/\|q(z)\|_2$, where $q(\cdot)$ represents the prediction neural network 116 and $z$ is the reduced dimensionality representation from projection neural network 114.

The neural network system 100 also includes a training engine 130 configured to implement a training process for the system.

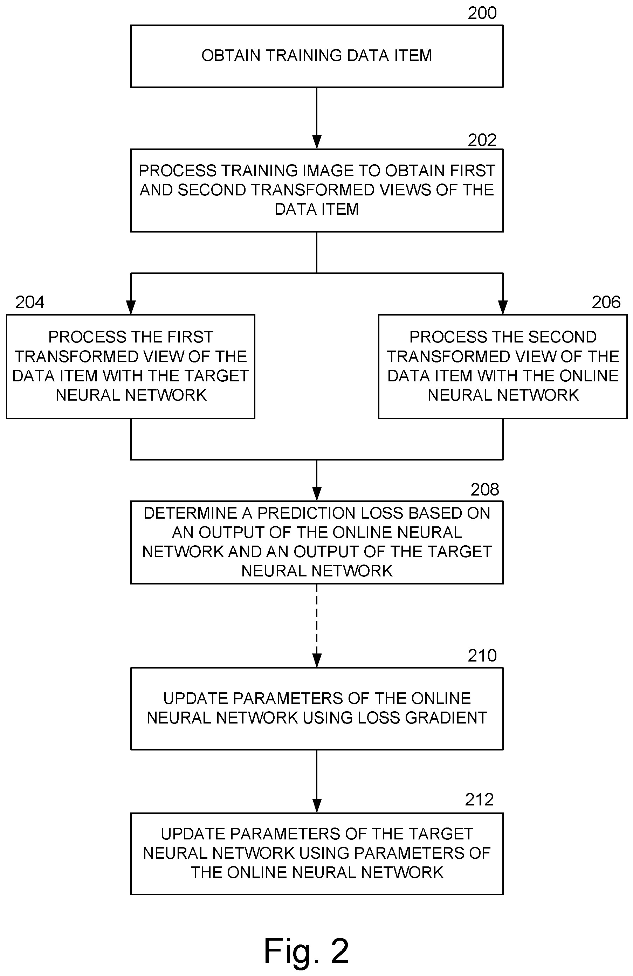

Figure 2 shows an example process for training the neural network system 100 of Figure 1, in particular the encoder neural network 112. The process of Figure 2 may be implemented as one or more computer programs on one or more computers in one or more locations.

The parameters of the online neural network 110 and of the target neural network 120 may be initialized to random values. At step 200 a training data item e.g. a training image, is obtained. This is then processed to obtain first and second differently transformed or "augmented" views of the data item (step 202). This may involve applying one or a sequence of transformations to the data item to generate each transformed view. For example each transformed view may be obtained by applying each of a set of transforms with a predetermined probability.

For example, where the training data item comprises an image the transformations may comprise one or more of: random cropping of the image, flipping the image, color jittering, color dropping, Gaussian blurring, and solarization. Random cropping may comprise selecting a random patch of the image and then expanding this to the original size of the image. Flipping the image may involve applying a horizontal or vertical flip to the image. Color jittering may comprise changing one or more of the brightness, contrast, saturation and hue of some or all pixels of the image by a random offset. Color dropping may comprise converting the image to greyscale. Gaussian blurring may comprise applying a Gaussian blurring kernel to the image; other types of kernel may be used for other types of filtering. Solarization may comprise applying a solarizing color transform to the image; other color transforms may be used. Other transforms are possible such as rotation, or cutting out part of the image (setting pixels of a random patch to a uniform value).

A transformation, e.g. of an image, may include an adversarial perturbation i.e. a perturbation which is selected to increase a likelihood that the encoder neural network 112 generates an erroneous representation. For example an adversarial attack may be implemented on one of the transformed views of the pair of transformed views, e.g. using the technique described in Madry et al., arXiv: 1706.06083, e.g. to maximize the error between the prediction 118 and the target output 126.

There are many different transformations which can be used to obtain the transformed views. The particular types of transformations used may be varied depending on e.g. the task the encoder neural network 112 is being trained for, and on the types of variations expected amongst the data items. Optionally the transformed views may be normalized e.g. over color channels in the case of an image. Normalization may involve subtracting an average value and dividing by the standard deviation.

The first transformed view of the data item is processed by the target neural network 120 to generate the target output 126 (step 204), and the second transformed view of the data item is processed by the online neural network 110 to generate the prediction 118 of the target output (step 206). Then a prediction error is determined between the prediction 118 and the target output 126, specifically a prediction loss based on the prediction 118 and the target output 126 (step 208). The prediction loss may comprise any measure of a difference between the prediction 118 and the target output 126, optionally normalized as previously described. For example the prediction loss or error may comprise a (mean) squared error, a negative cosine or dot product similarity, or a cross-entropy loss (if feature vector values are interpreted as probabilities and normalized). For example the prediction loss or error, L, may be determined as an L-norm e.g. as $\left\| \bar{q}(z) - \bar{z}' \right\|_2^2$ where $\|\cdot\|_2$ denotes an L2 norm.

In some implementations the method determines a further prediction loss or error, L', with the first and second transformed views swopped, i.e. with first transformed view of the data item processed by the online neural network 110 and the second transformed view of the data item is processed by the target neural network 120. Then a symmetric prediction loss or error $L^{TOTAL}$ may be determined by summing the losses, i.e. $L^{TOTAL} = L + L'$.

The process may accumulate the prediction loss or error over a batch of training data items before proceeding.

At steps 210 and 212 the parameters of the online neural network 110 and of the target neural network 120 are updated. However only the parameters of the online neural network 110, and not those of the target neural network 120, are updated by gradient descent i.e. by backpropagating gradients of the prediction loss or error. This may be expressed as providing a "stop gradient" for the target neural network 120 i.e. by stopping gradients flowing back into the target neural network 120. In practice, however, this may be achieved by training only the online neural network 110 using the prediction loss or error.

Thus at step 210 parameters of the online neural network 110 are updated to minimize the prediction loss or error, whilst at step 212 parameters of the target neural network 120 are updated based on the parameters of the online neural network. In some implementations minimizing the error may involve maximizing a similarity, e.g. a cosine similarity, between the prediction 118 and the target output 126.

In implementations the parameters of the online neural network 110 are updated using a stochastic optimization step implemented with a machine learning optimizer such as a gradient descent based optimizer, to minimize the prediction loss or error. Other types of machine learning optimizer may be used. In implementations the optimizer minimizes the prediction loss or error, e.g. L or $L^{TOTAL}$, only with respect to the parameters of the online neural network 110, i.e. not with respect to the parameters of the target neural network 120. For example the parameters of the online neural network 110 updated may be updated by back propagating gradients of the prediction loss or error through the prediction neural network 116, the projection neural network 114 (where present), and the encoder neural network 112.

In implementations the parameters of the target neural network 120 are updated based on the parameters of the corresponding part of the online neural network 110 i.e. not based on the prediction loss or error. The parameters of the target neural network 120 are determined as moving average of the parameters of the online neural network 110, e.g. a weighted or exponential moving average. In general the parameters of the target neural network 120 comprise a delayed (and more stable) version of the parameters of the online neural network 110.

In some implementations the parameters of the target neural network 120 may be determined using the update $\xi \leftarrow \tau\xi + (1 - \tau)\theta$ where $\tau$ is a target decay rate in the range [0, 1], $\xi$ is the a set of parameters of the target neural network 120, and $\theta$ is the set of parameters of the online neural network 110 except for the parameters of the prediction neural network, i.e. the parameters of the encoder neural network 112 and, where present, of the projection neural network 114. Merely by way of example $\tau$ may be greater than 0.99, and may be increased during training.

Implementations of the method thus use bootstrapping as the updated, i.e. partially trained, online neural network 110 is used to update the target neural network 120 to generate a new target output for further training of the online neural network 110. Training the online neural network 110 using the new target improves the representation from the encoder neural network 112.

The representation of, say, one augmented view of an image, e.g. one random crop, may be predictive of the representation of another augmented view of the same image, e.g. a neighboring crop. Surprisingly, however, the above-described training above does not result in collapse of the feature representation of the encoder neural network 112 into a constant vector, which would be the same for all augmentations. Instead the target neural network helps to stabilize the training. It is not necessary for the target neural network 120 to be updated at the same time as or with the same frequency as the online neural network.

After the neural network system 100 has been trained all of the system except for the encoder neural network 112 (and its trained parameters) may be discarded. That is, a result of the process of Figure 2 is a trained version of the encoder neural network 112.

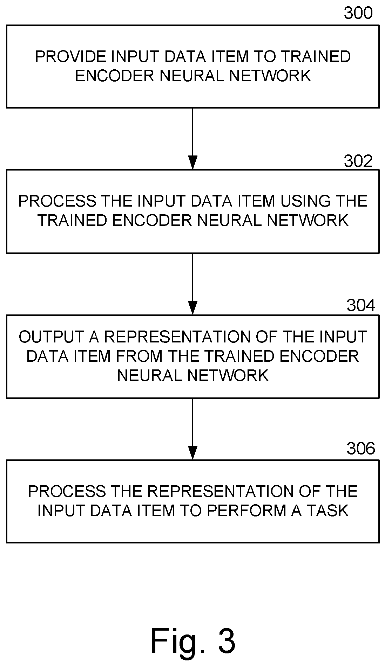

Figure 3 shows a process for using the trained encoder neural network 112 to process a data item, such as an image. The process may be implemented as one or more computer programs on one or more computers in one or more locations.

At step 300 an input data item, e.g. an image or video, is provided to the trained encoder neural network part of the trained online neural network 110. The input data item is processed using part or all of the trained encoder neural network 112 (step 302) to output a representation of the input data item (step 304). This is then processed further to perform a task (step 306), e.g. an image processing task as previously described. The trained encoder neural network 112 may be used to perform any processing task processing e.g. data items of the same type as those used to train the system.

Depending on the task, not all of the trained encoder neural network 112 may be needed to process a data item. Thus the representation output from the trained encoder neural network 112 may be the above described feature vector representation, or the representation output may be an output from an intermediate layer or "backbone" of the encoder neural network 112 rather than e.g. the output from a final fully-connected layer. For example where the encoder neural network has a ResNet architecture the representation output may be an output from an intermediate convolutional neural network layer.

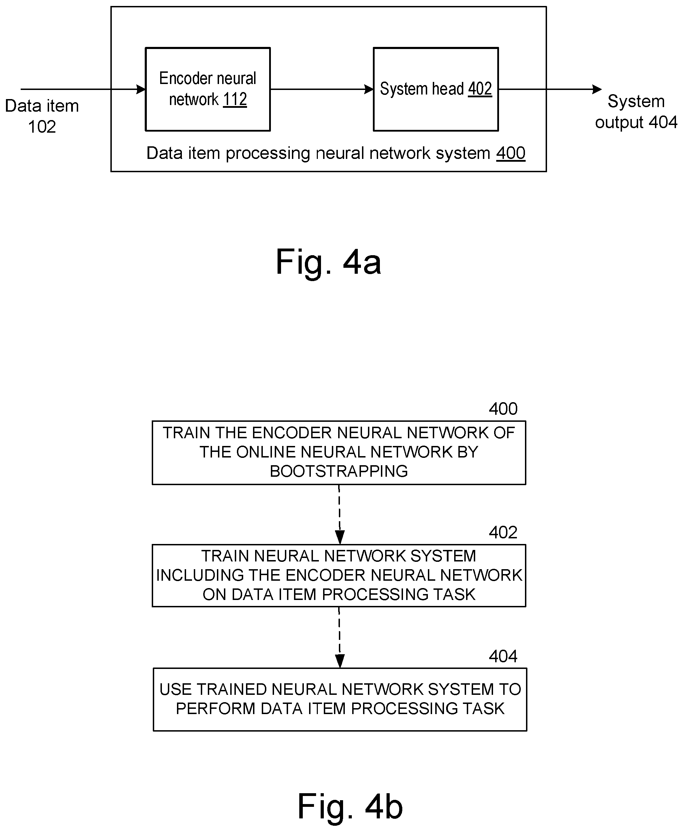

Figure 4a shows a computer-implemented data item processing neural network system 400 comprising trained encoder neural network 112 (or part thereof) and an optional system head 402, adapted to a data item processing task to be performed. The system 400 is configured to receive a data item as an input and to process the data item using the trained encoder neural network 112 (or part thereof) to output a representation of the input data item.

In some implementations a system output 404 for performing the data item processing task comprises the representation output from the trained encoder neural network 112. In some implementations the representation output from the trained encoder neural network 112 is further processed by the system head 402 to generate the system output 404 for the task.

As one example the representation output from the trained encoder neural network 112 comprises a feature vector representation which may be used to evaluate the similarity between two data items e.g. between two images. This may involve presenting each data item in turn to the encoder neural network 112 to generate a respective feature vector representation, and then comparing the representations using a similarity measure e.g. a distance metric such as an L-norm, or a dot product or cosine similarity measure. The similarity measure may be used, e.g., to detect when it is likely that a data item has been copied for duplicate or near-duplicate detection. This may also be used for data item verification. As another example, the feature vector representation output from the trained encoder neural network 112 may be used to evaluate the similarity between a target data item, e.g. a target image or video, and each of multiple data items, e.g. images or videos, in a database. The closest, or one of the closest, may be selected to retrieve from the database a data item or items which are similar to the target data item.

As a further example, a final output layer or layers of the trained encoder neural network 112 may be discarded after training and the representation output from the trained encoder neural network 112 may comprise a feature map output generated from (what was previously) an intermediate layer of the encoder neural network 112. Such a feature map can have utility e.g. to identify features of an input data item such as an input image, and the data item processing task may be a task to generate such a feature map from the input data item e.g. from an input image or images.

In some example implementations in which the data items are images and in which the representation output from the trained encoder neural network 112 is further processed by the system head 402, the neural network system 400 is an image processing system. For an image classification or scene recognition task the system head 402 may comprise a classifier e.g. a linear classifier. For a semantic segmentation task the representation output may be an output from an intermediate layer or "backbone" of the encoder neural network 112, e.g. from a ResNet convolutional layer, and the system head 402 may comprise semantic segmentation decoder neural network e.g. a convolutional neural network with a final $1 \times 1$ convolution for per-pixel classification. For an object detection task the representation output may also be an output from an intermediate layer or "backbone" of the encoder neural network 112 and the system head 402 may comprise a bounding box prediction neural network head. For a depth estimation task the representation output may be an output from an intermediate layer or "backbone" of the encoder neural network 112 and the system head 402 may comprise a convolutional neural network with one or more up-sampling blocks. In these examples the system output 404 may be an output for the task as previously described.

As another example, the representation output may be an output from an intermediate layer or "backbone" of the encoder neural network 112, the system head 402 may comprise a reinforcement learning system, and the system output 404 may be an action selection output for selecting an action to be performed by an agent e.g. a mechanical agent in e.g. a real world environment.

The data item processing neural network system 400 may be trained to perform the data item processing task. In some implementations, during such training the parameters of the trained encoder neural network 112 in the system 400 may be frozen and whilst parameters of the system head 402 are trained. In some implementations, during such training the parameters of the trained encoder neural network 112 and the parameters of the system head 402 may be jointly trained, to fine tune the parameters of the encoder neural network 112 to the task, optionally with some regularization.

Figure 4b shows a process for training and using the data item processing neural network system 400 to perform a data item processing task. The process may be implemented as one or more computer programs on one or more computers in one or more locations.

Figure 4b shows that the online neural network 110 including the encoder neural network 112 has previously been trained e.g. by the bootstrapping process of Figure 2 (step 400). At step 402 the process trains the system 400 by any machine learning technique, e.g. backpropagation of gradients of an objective function, to perform the data item processing task, using the same training data items as previously or new training data items. Step 402 may, but need not, include further training of parameters of the encoder neural network 112 (or the part thereof included in system 400). Then at step 404 the trained system 400 may be used to perform the data item processing task.

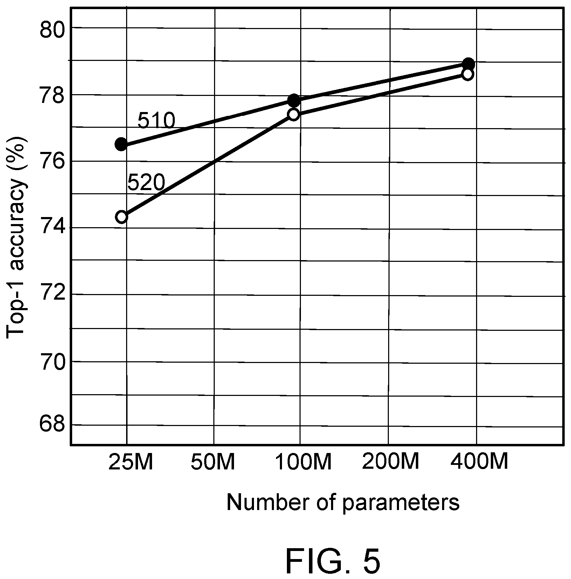

Figure 5 relates to classification of images from the ImageNet database (Russakovsky et al., ar-Xiv:1409.0575). The y-axis shows percentage top-1 accuracy, i.e. the accuracy of the prediction with the highest probability; the x-axis shows the number of parameters in the neural network performing the classification.

In Figure 5 curve 510 is for a ResNet-200 image classifier with supervised training. Curve 520 is for an image classification system comprising a ResNet-50 encoder neural network, followed by a linear classifier trained on top of the feature vector representation with the encoder neural network parameters frozen. The ResNet-50 encoder neural network is an encoder neural network 112 that has been trained as described above. The trained encoder neural network 112 performs better than other self-supervised approaches using a contrastive loss (not shown in Figure 5), and approaches the performance of supervised training.

The data items may in general be any type of data item, including images and video frames as previously described. In an example not covered by the subject-matter of the claims a data item may be an audio data item i.e. a data item comprising a representation of a digitized audio waveform e.g. a speech waveform. Such a representation may comprise samples representing digitized amplitude values of the waveform or, e.g., a time-frequency domain representation of the waveform such as a STFT (Short-Term Fourier Transform) or MFCC (Mel-Frequency Cepstral Coefficient) representation. In this case the transformed or augmented "views" of the data item may also include random crops, but in the time or frequency domain rather than in the spatial domain, e.g. selections of portions of the audio data item with random start and end times or with randomly selected upper and lower frequencies. Other transformed or augmented "views" of the data item may include modifications to the amplitude of a data item e.g. by randomly increasing or diminishing the amplitude of the audio; or modifications to the frequency characteristics of the audio e.g. by randomly filtering the audio.

Instead of a data item representing an audio waveform the data item in an example not covered by the subject-matter of the claims may represent the waveform of any signal e.g. a signal from a sensor e.g. a sensor sensing a characteristic of an object or of the real world. Then the transformed views of the data item may correspond to those described above for an audio waveform.

Where the data item represents a waveform e.g. an audio waveform, the data item processing task may comprise, for example: An identification or classification task such as a speech or sound recognition task, a phone or speaker classification task, or an audio tagging task, in which case the output may be a category score or tag for a data item or for a segment of the data item; or a similarity determination task e.g. an audio copy detection or search task, in which case the output may be a similarity score.

In some implementations not covered by the subject-matter of the claims a data item may be a text data item, and the transformed or augmented "views" of the data item may comprise crops of the data item or distortions of the data item such as grammar or spelling distortions. A data item processing task may comprise an identification or classification task, or a similarity determination task, e.g. to generate a category score, a similarity score, or a tag as described above; or a machine translation task. A data item may also represent an observation e.g. an observation of advertisement impressions or a click-through counts or rate, e.g. in combination with other data such as text data. The transformed views may then similarly include distortions of the data items, and similar tasks may be performed.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them.

Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented using a graphics processing unit (GPU) or Tensor Processing Unit (TPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The typical elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A computer-implemented method of training a neural network using unlabeled training data in a self-supervised learning process, the method comprising:

   processing a first transformed view (v') of a respective training data item from the unlabeled training data with a target neural network (120) including a respective encoder neural network (122) to generate a target output (126) comprising a representation of the training data item; processing a second transformed view (v) of the training data item with an online neural network (110) including a respective encoder neural network (112) to generate a prediction (118) of the target output comprising a representation of the training data item; updating one or more parameters of the online neural network to minimize an error between the prediction of the target output and the target output; and updating one or more parameters of the target neural network with a moving average of the parameters of the online neural network; wherein the online neural network further comprises a prediction neural network (116) to predict the target output, and wherein the target neural network does not comprise a prediction neural network, and wherein the online neural network and the target neural network have the same neural network architecture, except for the prediction neural network, but different parameter values, and wherein the method further comprises performing, by the prediction neural network, operations including:

   receiving a representation of the training data item derived from the respective encoder neural network (112) of the online neural network (110); and processing the representation of the training data item, using a regression model embodied by parameters of the prediction neural network, to generate the prediction of the target output; wherein the training data comprises image data items, wherein the training data item comprises an image, and wherein the online neural network is trained for performing an image processing task;

the method further comprising generating a representation of pixels of an input image using the respective encoder neural network (112) of the trained online neural network; and using the representation to perform an image processing task by processing the representation of the pixels of the input image; wherein processing the representation of the pixels of the input image comprises either:

> i) classifying the image using the representation of the pixels of the image; or
> ii) performing an image segmentation task using the representation of the pixels of the image; or
> iii) performing an object detection task using the representation of the pixels of the image; or
> iv) performing an object localization task using the representation of the pixels of the image; or
> v) performing an image keypoint detection task using the representation of the pixels of the image; or
> vi) performing an image similarity determination task using the representation of the pixels of the image.

2. The method of claim 1, wherein updating one or more parameters of the target neural network comprises:
determining updated values of the one or more parameters of the target neural network in accordance with $\xi \leftarrow \tau\xi + (1 - \tau)\theta$, where $\xi$ represents the parameters of the target neural network, $\theta$ represents the parameters of the online neural network, and $\tau$ is a decay rate.

3. The method of any one of claims 1-2, wherein the online neural network and the target neural network each comprise a respective projection neural network (114; 124), and wherein the method further comprises performing, by each projection neural network, operations including:

> receiving the representation of the training data item; and
> processing the representation of the training data item to reduce the dimensionality of the representation; in particular
> wherein each projection neural network comprises a multi-layer perceptron.

4. The method of any one of the preceding claims, wherein the prediction neural network comprises a multi-layer perceptron.

5. The method of any one of the preceding claims, further comprising:
initializing the parameters of the online neural network and/or the target neural network to random values.

6. The method of any one of the preceding claims, further comprising:

> applying a first data item transformation to the training data item to generate the first transformed view of the training data item; and
> applying a second data item transformation to the training data item to generate the second transformed view of the training data item, wherein the second data item transformation is different from the first data item transformation.

7. The method of any one of the preceding claims, wherein updating one or more parameters of the online neural network comprises:

> normalizing the prediction of the target output; and
> minimizing a squared error between the normalized prediction of the target output and the target output.

8. The method of any one of the preceding claims, further comprising iteratively performing the operations of processing the first transformed view of the training data item with the target neural network and processing the second transformed view of the training data item with the online neural network, for each training data item in a batch comprising a plurality of training data items from the unlabeled training data; and then updating the one or more parameters of the online neural network and updating the one or more parameters of the target neural network.

9. A system comprising one or more computers and one or more storage devices storing instructions that when executed by the one or more computers cause the one or more computers to perform the method of any one of claims 1-8.

10. One or more computer storage media storing instructions that when executed by one or more computers cause the one or more computers to perform the method of any one of claims 1-8.

## Patentansprüche

1. Computerimplementiertes Verfahren zum Trainieren eines neuronalen Netzwerks unter Verwendung von unmarkierten Trainingsdaten in einem selbstüberwachten Lernprozess, wobei das Verfahren umfasst:

   Verarbeiten einer ersten transformierten Ansicht (v') eines jeweiligen Trainingsdatenelements aus den unmarkierten Trainingsdaten mit einem neuronalen Zielnetzwerk (120), das ein jeweiliges neuronales Encoder-Netzwerk (122) beinhaltet, um eine Zielausgabe (126) zu erzeugen, die eine Repräsentation des Trainingsdatenelements umfasst;
   Verarbeiten einer zweiten transformierten Ansicht (v) des Trainingsdatenelements mit einem neuronalen Online-Netzwerk (110), das ein jeweiliges neuronales Encoder-Netzwerk (112) beinhaltet, um eine Prädiktion (118) der Zielausgabe zu erzeugen, die eine Repräsentation des Trainingsdatenelements umfasst;
   Aktualisieren eines oder mehrerer Parameter des neuronalen Online-Netzwerks, um einen Fehler zwischen der Prädiktion der Zielausgabe und der Zielausgabe zu minimieren; und
   Aktualisieren eines oder mehrerer Parameter des neuronalen Zielnetzwerks mit einem gleitenden Mittelwert der Parameter des neuronalen Online-Netzwerks;
   wobei das neuronale Online-Netzwerk ferner ein neuronales Prädiktionsnetzwerk (116) umfasst, um die Zielausgabe vorherzusagen, und wobei das neuronale Zielnetzwerk kein neuronales Prädiktionsnetzwerk umfasst, und wobei das neuronale Online-Netzwerk und das neuronale Zielnetzwerk die gleiche Architektur des neuronalen Netzwerks aufweisen, mit Ausnahme des neuronalen Prädiktionsnetzwerks, aber unterschiedliche Parameterwerte haben, und wobei das Verfahren ferner das Durchführen, durch das neuronale Prädiktionsnetzwerk, von Operationen umfasst, die beinhalten:

      Empfangen einer Repräsentation des Trainingsdatenelements, die von dem jeweiligen neuronalen Encoder-Netzwerk (112) des neuronalen Online-Netzwerks (110) abgeleitet ist; und
      Verarbeiten der Repräsentation des Trainingsdatenelements unter Verwendung eines Regressionsmodells, das durch Parameter des neuronalen Prädiktionsnetzwerks verkörpert wird, um die Prädiktion der Zielausgabe zu erzeugen;
      wobei die Trainingsdaten Bilddatenelemente umfassen, wobei das Trainingsdatenelement ein Bild umfasst, und wobei das neuronale Online-Netzwerk zum Durchführen einer Bildverarbeitungsaufgabe trainiert wird;
   wobei das Verfahren ferner das Erzeugen einer Repräsentation von Pixeln eines Eingabebildes unter Verwendung des jeweiligen neuronalen Encoder-Netzwerks (112) des trainierten neuronalen Online-Netzwerks umfasst; und Verwenden der Repräsentation, um eine Bildverarbeitungsaufgabe durch Verarbeiten der Repräsentation der Pixel des Eingabebildes durchzuführen;
   wobei das Verarbeiten der Repräsentation der Pixel des Eingabebildes eines der Folgenden umfasst:

      i) Klassifizieren des Bildes unter Verwendung der Repräsentation der Pixel des Bildes; oder
      ii) Durchführen einer Bildsegmentierungsaufgabe unter Verwendung der Repräsentation der Pixel des Bildes; oder
      iii) Durchführen einer Objektdetektionsaufgabe unter Verwendung der Repräsentation der Pixel des Bildes; oder
      iv) Durchführen einer Objektlokalisierungsaufgabe unter Verwendung der Repräsentation der Pixel des Bildes; oder
      v) Durchführen einer Bild-Keypoint-Detektionsaufgabe unter Verwendung der Repräsentation der Pixel des Bildes; oder
      vi) Durchführen einer Bildähnlichkeitsbestimmungsaufgabe unter Verwendung der Repräsentation der Pixel des Bildes.

2. Verfahren nach Anspruch 1, wobei das Aktualisieren eines oder mehrerer Parameter des neuronalen Zielnetzwerks umfasst: Bestimmen aktualisierter Werte des einen oder der mehreren Parameter des neuronalen Zielnetzwerks gemäß $\xi \leftarrow \tau\xi + (1 - \tau)\theta$, wobei $\xi$ die Parameter des neuronalen Zielnetzwerks darstellt, $\theta$ die Parameter des neuronalen Online-Netzwerks darstellt und $\tau$ eine Abklingrate ist.

3. Verfahren nach einem der Ansprüche 1-2, wobei das neuronale Online-Netzwerk und das neuronale Zielnetzwerk jeweils ein jeweiliges neuronales Projektionsnetzwerk (114; 124) umfassen, und wobei das Verfahren ferner das Durchführen, durch jedes neuronale Projektionsnetzwerk, von Operationen umfasst, die beinhalten:

Empfangen der Repräsentation des Trainingsdatenelements; und Verarbeiten der Repräsentation des Trainingsdatenelements, um die Dimensionalität der Repräsentation zu reduzieren; insbesondere
wobei jedes neuronale Projektionsnetzwerk ein mehrschichtiges Perzeptron umfasst.

4. Verfahren nach einem der vorhergehenden Ansprüche, wobei das neuronale Prädiktionsnetzwerk ein mehrschichtiges Perzeptron umfasst.

5. Verfahren nach einem der vorhergehenden Ansprüche, ferner umfassend:
Initialisieren der Parameter des neuronalen Online-Netzwerks und/oder des neuronalen Zielnetzwerks auf Zufallswerte.

6. Verfahren nach einem der vorhergehenden Ansprüche, ferner umfassend:

Anwenden einer ersten Datenelement-Transformation auf das Trainingsdatenelement, um die erste transformierte Ansicht des Trainingsdatenelements zu erzeugen; und
Anwenden einer zweiten Datenelement-Transformation auf das Trainingsdatenelement, um die zweite transformierte Ansicht des Trainingsdatenelements zu erzeugen, wobei die zweite Datenelement-Transformation von der ersten Datenelement-Transformation verschieden ist.

7. Verfahren nach einem der vorhergehenden Ansprüche, wobei das Aktualisieren eines oder mehrerer Parameter des neuronalen Online-Netzwerks umfasst:

Normalisieren der Prädiktion der Zielausgabe; und
Minimieren eines quadratischen Fehlers zwischen der normalisierten Prädiktion der Zielausgabe und der Zielausgabe.

8. Verfahren nach einem der vorhergehenden Ansprüche, ferner umfassend das iterative Durchführen der Operationen des Verarbeitens der ersten transformierten Ansicht des Trainingsdatenelements mit dem neuronalen Zielnetzwerk und des Verarbeitens der zweiten transformierten Ansicht des Trainingsdatenelements mit dem neuronalen Online-Netzwerk, für jedes Trainingsdatenelement in einem Batch, der eine Vielzahl von Trainingsdatenelementen aus den unmarkierten Trainingsdaten umfasst; und anschließend Aktualisieren des einen oder der mehreren Parameter des neuronalen Online-Netzwerks und Aktualisieren des einen oder der mehreren Parameter des neuronalen Zielnetzwerks.

9. System, umfassend einen oder mehrere Computer und eine oder mehrere Speichervorrichtungen, die Anweisungen speichern, die bei Ausführung durch den einen oder die mehreren Computer bewirken, dass der eine oder die mehreren Computer das Verfahren nach einem der Ansprüche 1-8 durchführen.

10. Ein oder mehrere Computerspeichermedien, die Anweisungen speichern, die bei Ausführung durch einen oder mehrere Computer bewirken, dass der eine oder die mehreren Computer das Verfahren nach einem der Ansprüche 1-8 durchführen.

**Revendications**

1. Procédé mis en œuvre par ordinateur d'entraînement d'un réseau neuronal à l'aide de données d'entraînement non étiquetées dans un processus d'apprentissage auto-supervisé, le procédé comprenant :

le traitement d'une première vue transformée (v') d'un élément de données d'entraînement respectif à partir des données d'entraînement non étiquetées avec un réseau neuronal cible (120) comportant un réseau neuronal d'encodeur respectif (122) pour générer une sortie cible (126) comprenant une représentation de l'élément de données d'entraînement ;
le traitement d'une seconde vue transformée (v) de l'élément de données d'entraînement avec un réseau neuronal en ligne (110) comportant un réseau neuronal d'encodeur respectif (112) pour générer une prédiction (118) de la sortie cible comprenant une représentation de l'élément de données d'entraînement ;
la mise à jour d'un ou de plusieurs paramètres du réseau neuronal en ligne afin de minimiser une erreur entre la prédiction de la sortie cible et la sortie cible ; et
la mise à jour d'un ou de plusieurs paramètres du réseau neuronal cible avec une moyenne mobile des paramètres du réseau neuronal en ligne ;
dans lequel le réseau neuronal en ligne comprend également un réseau neuronal de prédiction (116) pour prédire la sortie cible, et dans lequel le réseau neuronal cible ne comprend pas de réseau neuronal de prédiction, et dans lequel le réseau neuronal en ligne et le réseau neuronal cible présentent la même architecture de réseau neuronal, à l'exception du réseau neuronal de prédiction, mais des valeurs de paramètres différentes, et
dans lequel le procédé comprend également la réalisation, par le réseau neuronal de prédiction, d'opérations comportant :

la réception d'une représentation de l'élément de données d'entraînement dérivée du réseau neuronal d'encodeur respectif (112) du réseau neuronal en ligne (110) ; et le traitement de la représentation de l'élément de données d'entraînement, à l'aide d'un modèle de régression incarné par des paramètres du réseau neuronal de prédiction, pour générer la prédiction de la sortie cible ;
dans lequel les données d'entraînement comprennent des éléments de données d'image, dans lequel l'élément de données d'entraînement comprend une image, et dans lequel le réseau neuronal en ligne est entraîné pour réaliser une tâche de traitement d'image ;
le procédé comprenant également la génération d'une représentation de pixels d'une image d'entrée à l'aide du réseau neuronal d'encodeur respectif (112) du réseau neuronal en ligne entraîné ; et l'utilisation de la représentation pour réaliser une tâche de traitement d'image en traitant la représentation des pixels de l'image d'entrée ; dans lequel le traitement de la représentation des pixels de l'image d'entrée comprend soit :

i) le classement de l'image à l'aide de la représentation des pixels de l'image ; soit

ii) la réalisation d'une tâche de segmentation d'image à l'aide de la représentation des pixels de l'image ; soit
iii) la réalisation d'une tâche de détection d'objet à l'aide de la représentation des pixels de l'image ; soit
iv) la réalisation d'une tâche de localisation d'objet à l'aide de la représentation des pixels de l'image ; soit
v) la réalisation d'une tâche de détection de point clé d'image à l'aide de la représentation des pixels de l'image ; soit

vi) la réalisation d'une tâche de détermination de similarité d'image à l'aide de la représentation des pixels de l'image.

2. Procédé selon la revendication 1, dans lequel la mise à jour d'un ou de plusieurs paramètres du réseau neuronal cible comprend :
la détermination de valeurs mises à jour des un ou plusieurs paramètres du réseau neuronal cible selon $\xi \leftarrow \tau\xi + (1 - \tau)\theta$, où $\xi$ représente les paramètres du réseau neuronal cible, $\theta$ représente les paramètres

du réseau neuronal en ligne et $\tau$ est un taux de décroissance.

3. Procédé selon l'une quelconque des revendications 1 à 2, dans lequel le réseau neuronal en ligne et le réseau neuronal cible comprennent chacun un réseau neuronal de projection respectif (114 ; 124), et dans lequel le procédé comprend également la réalisation, par chaque réseau neuronal de projection, d'opérations comportant :

la réception de la représentation de l'élément de données d'entraînement ; et
le traitement de la représentation de l'élément de données d'entraînement afin de réduire la dimensionnalité de la représentation ; en particulier
dans lequel chaque réseau neuronal de projection comprend un perceptron multicouche.

4. Procédé selon l'une quelconque des revendications précédentes, dans lequel le réseau neuronal de prédiction comprend un perceptron multicouche.

5. Procédé selon l'une quelconque des revendications précédentes, comprenant également :
l'initialisation des paramètres du réseau neuronal en ligne et/ou du réseau neuronal cible à des valeurs aléatoires.

6. Procédé selon l'une quelconque des revendications précédentes, comprenant également :

l'application d'une première transformation d'élément de données à l'élément de données d'entraînement afin de générer la première vue transformée de l'élément de données d'entraînement ; et
l'application d'une seconde transformation d'élément de données à l'élément de données d'entraînement pour générer la seconde vue transformée de l'élément de données d'entraînement, dans lequel la seconde transformation d'élément de données est différente de la première transformation d'élément de données.

7. Procédé selon l'une quelconque des revendications précédentes, dans lequel la mise à jour d'un ou de plusieurs paramètres du réseau neuronal en ligne comprend :

la normalisation de la prédiction de la sortie cible ; et
la minimisation d'une erreur quadratique entre la prédiction normalisée de la sortie cible et la sortie cible.

8. Procédé selon l'une quelconque des revendications précédentes, comprenant également la réalisation itérative des opérations de traitement de la première vue transformée de l'élément de données d'entraînement avec le réseau neuronal cible et de traitement de la seconde vue transformée de l'élément de données d'entraînement avec le réseau neuronal en ligne, pour chaque élément de données d'entraînement d'un lot comprenant une pluralité d'éléments de données d'entraînement provenant des données d'entraînement non étiquetées ; puis la mise à jour des un ou plusieurs paramètres du réseau neuronal en ligne et la mise à jour des un ou plusieurs paramètres du réseau neuronal cible.

9. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser le procédé selon l'une quelconque des revendications 1 à 8.

10. Un ou plusieurs supports de stockage informatiques stockant des instructions qui, lorsqu'elles sont exécutées par un ou plusieurs ordinateurs, amènent les un ou plusieurs ordinateurs à réaliser le procédé selon l'une quelconque des revendications 1 à 8.

Fig. 1

```
                                                              200
┌─────────────────────────────────────────────────┐
│            OBTAIN TRAINING DATA ITEM              │
└─────────────────────────────────────────────────┘
                         │
                         ▼                            202
┌─────────────────────────────────────────────────┐
│    PROCESS TRAINING IMAGE TO OBTAIN FIRST         │
│    AND SECOND TRANSFORMED VIEWS OF THE            │
│                 DATA ITEM                         │
└─────────────────────────────────────────────────┘
             │                              │
   204       ▼                              ▼         206
┌────────────────────────┐      ┌────────────────────────┐
│  PROCESS THE FIRST     │      │  PROCESS THE SECOND    │
│  TRANSFORMED VIEW OF   │      │  TRANSFORMED VIEW OF   │
│  THE DATA ITEM WITH    │      │  THE DATA ITEM WITH    │
│  THE TARGET NEURAL     │      │  THE ONLINE NEURAL     │
│  NETWORK               │      │  NETWORK               │
└────────────────────────┘      └────────────────────────┘
             │                              │
             └──────────────┬───────────────┘
                            ▼                 208
┌─────────────────────────────────────────────────┐
│   DETERMINE A PREDICTION LOSS BASED ON            │
│   AN OUTPUT OF THE ONLINE NEURAL                  │
│   NETWORK AND AN OUTPUT OF THE TARGET             │
│             NEURAL NETWORK                        │
└─────────────────────────────────────────────────┘
                         ┊
                         ▼                            210
┌─────────────────────────────────────────────────┐
│      UPDATE PARAMETERS OF THE ONLINE              │
│   NEURAL NETWORK USING LOSS GRADIENT              │
└─────────────────────────────────────────────────┘
                         │
                         ▼                            212
┌─────────────────────────────────────────────────┐
│     UPDATE PARAMETERS OF THE TARGET               │
│  NEURAL NETWORK USING PARAMETERS OF               │
│       THE ONLINE NEURAL NETWORK                   │
└─────────────────────────────────────────────────┘
```

# Fig. 2

300

PROVIDE INPUT DATA ITEM TO TRAINED
ENCODER NEURAL NETWORK

302

PROCESS THE INPUT DATA ITEM USING THE
TRAINED ENCODER NEURAL NETWORK

304

OUTPUT A REPRESENTATION OF THE INPUT
DATA ITEM FROM THE TRAINED ENCODER
NEURAL NETWORK

306

PROCESS THE REPRESENTATION OF THE
INPUT DATA ITEM TO PERFORM A TASK

# Fig. 3

Data item
102

Encoder neural
network 112

System head 402

System
output 404

Data item processing neural network system 400

# Fig. 4a

400
TRAIN THE ENCODER NEURAL NETWORK OF
THE ONLINE NEURAL NETWORK BY
BOOTSTRAPPING

402
TRAIN NEURAL NETWORK SYSTEM
INCLUDING THE ENCODER NEURAL NETWORK
ON DATA ITEM PROCESSING TASK

404
USE TRAINED NEURAL NETWORK SYSTEM TO
PERFORM DATA ITEM PROCESSING TASK

# Fig. 4b

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TARVAINEN et al.** Mean teachers are better role models: Weight-averaged consistency targets improve semi-supervised deep learning results. *arxiv: 1703.01780*, 16 April 2018
- **HE et al.** *arXiv:1512.03385*
- **MADRY et al.** *arXiv: 1706.06083*
- **RUSSAKOVSKY et al.** *arXiv:1409.0575*